# EUROPÄISCHE PATENTSCHRIFT

(11) **EP 2 837 448 B1**
(45) Veröffentlichungstag und Bekanntmachung des Hinweises auf die Patenterteilung: **02.10.2024**
(21) Anmeldenummer: 14180665.3
(22) Anmeldetag: 12.08.2014
(51) Int. Cl.: B23B 31/02, B23C 5/28, B23B 51/06, B23Q 11/10

(54) **Werkzeugaufnahme**
Tool holder
Porte-outil

(30) Priorität: 14.08.2013 DE 102013108787
(43) Veröffentlichungstag der Anmeldung: 18.02.2015
(73) Patentinhaber: Franz Haimer Maschinenbau KG, 86568 Hollenbach-Igenhausen (DE)
(72) Erfinder: Haimer, Franz, 86568 Hollenbach (DE)
(74) Vertreter: Schwarz, Wolfgang

(56) Entgegenhaltungen:
- EP-A1- 2 301 697
- WO-A1-03/026843

## Beschreibung

Die Erfindung betrifft eine Werkzeugaufnahme nach dem Oberbegriff des Anspruchs 1.

Moderne Werkzeugmaschinen weisen in der Regel die Möglichkeit einer inneren Kühlmittelzufuhr auf. Sie enthalten üblicherweise eine Kühlmittelzuführung, über die das Kühlmittel durch die Maschinenspindel der Werkzeugmaschine und einen zentralen Kühlmittelkanal in der Werkzeugaufnahme zum Werkzeug geleitet werden kann.

Aus der EP 2 301 697 A1 ist eine gattungsgemäße Werkzeugaufnahme mit einer Fluidzuführung innerhalb der Werkzeugaufnahme bekannt. In der Fluidzuführung der Werkzeugaufnahme ist eine Drosselstelle zur Aufrechterhaltung des Drucks innerhalb des Fluidkanals stromaufwärts der Drosselstelle vorgesehen. Bei dieser bekannten Werkzeugaufnahme ist die Drosselstelle in einem Drosselteil angeordnet, welches axial beweglich in einer entsprechenden Aufnahmeöffnung einer Spannzangenaufnahme angeordnet ist.

Neben den konventionellen Kühlschmiermitteln werden insbesondere für die Bearbeitung anspruchsvoller Werkstoffe zunehmend alternative Kühlkonzepte eingesetzt. In einer kryogenen Prozesskühlung wird z.B. flüssiger Stickstoff oder flüssiges CO₂ unter Druck durch die Werkzeugaufnahme hindurch zu einer oder mehreren durch das Werkzeug verlaufenden Kühlbohrungen geleitet. Bei dem sogenannten Schneestrahl-Kühlverfahren wird flüssiges CO₂ zu der Wirkstelle geleitet, wo es expandiert und ein Gemisch aus Trockeneis und kaltem Gas bildet. Allerdings sollte bei diesem Kühlkonzept keine verfrühte Verdampfung auftreten. Daher müssen die Werkzeugaufnahmen speziell für diese Kühlkonzepte ausgelegt werden.

Aufgabe der Erfindung ist es, eine Werkzeugaufnahme zu schaffen, die eine verbesserte Zuführung alternativer Fluide zum Werkzeug ermöglicht.

Diese Aufgabe wird durch eine Werkzeugaufnahme mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Werkzeugaufnahme ist die Drosselstelle in einem am Werkzeugschaft des Werkzeugs anliegbaren Dichtstück angeordnet, das elastisch nachgiebig und/oder um eine Längsachse pendelnd in einem in der Werkzeugaufnahme angeordneten Anschlagteil angeordnet ist. Dadurch kann gewährleistet werden, dass der Druck des Fluid möglichst lange hoch gehalten wird und somit keine verfrühte Verdampfung des Fluids erfolgt. So kann z.B. der Druck von flüssigem CO₂ innerhalb der Werkzeugaufnahme oder des Werkzeugs auf über 5,2 bar, besser noch über 10 oder 20 bar, gehalten und dort die Verdampfung gering gehalten und eine Eisbildung vermieden werden. Idealerweise wird der Druck annähernd so hoch gehalten, dass er auf der Siedelinie bei der jeweiligen Umgebungstemperatur liegt, also beispielsweise ca. 57 bar bei 20 °C. Es versteht sich, dass ein gewisser Druckabfall alleine schon durch Leitungsverluste und damit verbunden eine Verdampfung eines Anteils des flüssigen CO₂ unvermeidlich ist. Erst an der eigentlichen Wirkstelle, d.h. möglichst nahe an der Werkzeugschneide, soll sich das verbliebene flüssige CO₂ entspannen und durch Aufnahme von Verdampfungsenergie aus der Umgebung die Werkzeugschneide kühlen. Dabei kann das flüssige CO₂ ungekühlt zugeführt werden, also Raumtemperatur aufweisen, da es erst durch die Verdampfung und Expansion des Gases zu einem Temperaturabfall kommt.

Besonders zweckmäßig kann die Drosselstelle von der Austrittsstelle des Fluidkanals in die Umgebung einen Abstand aufweisen, der in etwa dem Durchmesser des Werkzeugs entspricht. Dies ermöglicht eine (Teil-)Verdampfung und damit eine gezielte Kühlwirkung bereits im Werkzeuginneren, woraus sich eine besonders gute und gleichmäßige Kühlwirkung auf das Werkzeug, insbesondere den Bereich der Schneide, ergibt. Das hat zur Folge, dass die thermische Belastung auf das Werkzeug aufgrund der geringeren Temperaturgradienten reduziert wird. "In etwa" bedeutet, dass auch Abweichungen des Abstands der Drosselstelle von der Schneide von 20% mit umfasst sind.

Abhängig von dem Werkzeug und dem gewünschten Kühlprofil kann die Drosselstelle jedoch auch weiter von der Austrittsstelle entfernt angeordnet sein.

Sofern in dem Werkzeug Verzweigungen der Fluidzuführung vorgesehen sind, kann die Drosselstelle zudem sowohl vor der Verzweigung als auch dieser nachgelagert sein, wobei dann mehrere Drosselstellen notwendig sind.

Unter dem Begriff "Drosselstelle" ist nicht notgedrungen ein einziger Ort zu verstehen. Die Drosselung kann auch stufenweise an mehreren hintereinander folgenden Orten entlang des Fluidkanals erfolgen. Möglich ist auch eine allmähliche Querschnittsverengung, z. B. durch einen sich über eine gewisse Länge konisch verjüngenden Fluidkanal.

Die Drosselstelle innerhalb der Werkzeugaufnahme ist zweckmäßigerweise möglichst nahe am Werkzeugschaft angeordnet.

Die Drosselstelle kann einen festen oder veränderlichen Drosselquerschnitt aufweisen. Die Fluidzuführung im Aufnahmekörper kann durch ein Durchgangsloch im Anschlagteil, ein weiteres Durchgangsloch in einem im Aufnahmekörper angeordneten Übergabeelement und ein im Aufnahmekörper angeordnetes Verbindungsrohr zur Verbindung der beiden Durchgangslöcher gebildet sein.

Bevorzugt weist die Drosselstelle ein Querschnittsverhältnis kleiner 0,5; besonders bevorzugt 0,2 und ganz besonders bevorzugt 0,1 auf. Ein derartiges Querschnittsverhältnis ermöglicht es besonders gut, den Druck auf ein Fluid wie beispielsweise flüssiges CO₂, so hoch zu halten, dass in der Fluidzuführung keine übermäßige vorzeitige Verdampfung erfolgt. Als Querschnittsverhältnis bei einer oder mehreren Drosselstellen ist das Verhältnis der Summe aller Querschnitte nach den Drosselstellen zur Summe aller Querschnitte vor den Drosselstellen zu verstehen.

Zwischen dem Übergabeelement und dem Anschlagteil ist zweckmäßigerweise eine durch Dichtungen radial gegenüber dem Aufnahmekörper abgestützte Dichthülse angeordnet. Durch die Dichtungen wird eine vibrationsgedämpfte und zentrierte Anordnung der Dichthülse erreicht.

In dem Übergabeelement kann ein Dichtstück zur abgedichteten Verbindung mit einer maschinenseitigen Übergabelanze angeordnet sein. Dieses Dichtstück kann über eine Dichtung gegenüber dem Übergabeelement abgedichtet und/oder über eine Schnappverbindung mit dem Übergabeelement verbunden sein.

In dem Aufnahmekörper kann auch ein von der vorstehend beschriebenen Fluidzuführung getrennter und mit dieser nicht in Fluidverbindung stehender weiterer Fluidkanal verlaufen.

Durch die Fluidzuführung kann so z.B. flüssiges CO₂ unter Druck durch die Werkzeugaufnahme hindurch zu einer oder mehreren durch das Werkzeug verlaufenden Kühlbohrungen geleitet werden, während über den weiteren Fluidkanal ein Ölnebel oder ein anderer konventioneller Kühlschmierstoff zu der Außenseite des Werkzeugschafts und an diesem entlang zu der Werkzeugschneide geführt wird. Möglich wäre auch eine getrennte Zuführung zweier Fluide durch separate Fluidkanäle im Werkzeug. Dadurch kann das Einsatzgebiet der Werkzeugaufnahme erweitert werden. Die beiden Fluidzuführungen sind vollständig voneinander getrennt und weisen getrennte Ein- und Auslässe an der Werkzeugaufnahme auf. Es findet keine Vermischung der über die beiden Fluidzuführungen eingeleiteten Fluide innerhalb der Werkzeugaufnahme statt.

Der weitere Fluidkanal kann durch mindestens einen vom Durchgangsloch getrennten Durchgangskanal im Anschlagteil, mindestens einen vom weiteren Durchgangsloch getrennten weiteren Durchgangskanal im Übergabeelement und einem im Aufnahmekörper angeordneten Verbindungskanal zur Verbindung der Durchgangskanäle gebildet sein.

Für die Zuführung eines Fluids entlang der Außenseite eines Werkzeugschafts kann der weitere Fluidkanal in Längsschlitze münden, die an der Innenseite der Aufnahmeöffnung im vorderen Spannbereich des Aufnahmekörpers angeordnet sind. Diese Längsschlitze können konisch verlaufen, wodurch auch hier eine beschleunigte und gerichtete Strahlführung erreicht werden kann.

Die Werkzeugaufnahme ist vorzugsweise als Schrumpffutter mit einem durch Erwärmung aufweitbaren vorderen Spannbereich ausgeführt. Sie könnte aber auch als Spannzangenfutter mit einer Spannzange und einer Spannmutter, als Dehnspannfutter oder als Rollenkraftspannfutter oder dgl. ausgebildet sein.

Weitere Besonderheiten und Vorzüge der Erfindung ergeben sich aus der folgenden Beschreibung bevorzugter Ausführungsbeispiele anhand der Zeichnung. Es zeigen:
- **Figur** 1: ein erstes Ausführungsbeispiel einer Werkzeuganordnung mit einer nicht erfinderischenWerkzeugaufnahme und einem Werkzeug in einem Längsschnitt;
- Figur 2: eine vergrößerte Detailansicht eines Bereichs von Figur 1;
- **Figur** 3: eine vergrößerte Detailansicht der Dichtung und zweites Ausführungsbeispiel einer erfinderischen Werkzeugaufnahme in einem Längsschnitt;
- Figur 4: eine vergrößerte Detailansicht einer Dichtung gemäß einer weiteren erfinderischen Ausführung

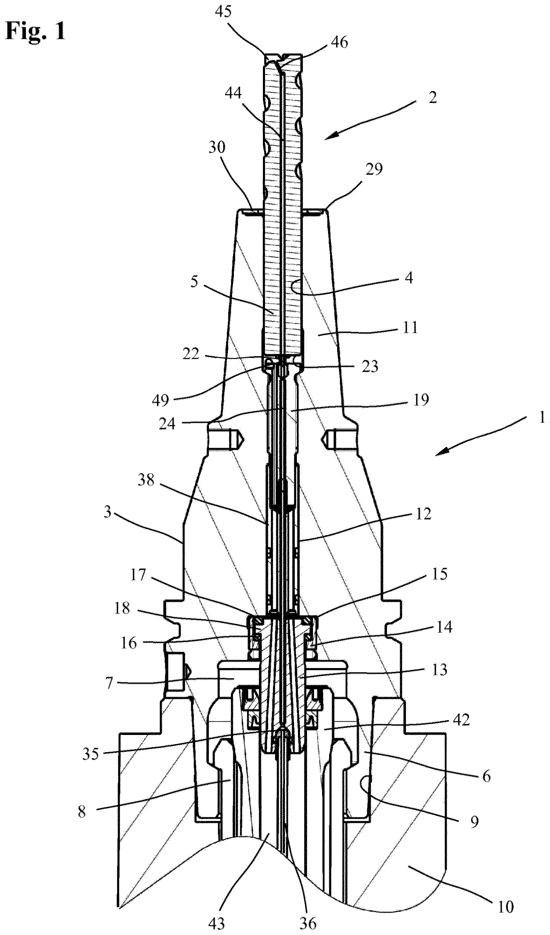

In Figur 1 ist ein Ausführungsbeispiel einer Werkzeuganordnung mit einer Werkzeugaufnahme 1 und einem Werkzeug 2 gezeigt. Die hier z.B. als HSK-Werkzeugaufnahme ausgeführte Werkzeugaufnahme 1 enthält einen um eine Mittelachse drehbaren rotationssymmetrischen Aufnahmekörper 3, der an einem werkzeugseitigen Ende eine Aufnahmeöffnung 4 für einen Werkzeugschaft 5 des z.B. als Bohrer, Fräser oder dgl. ausgebildeten Werkzeugs 2 und an einem maschinenseitigen Ende einen Spannkegel 6 mit einem Hohlraum 7 für den Eingriff von zangenförmigen Spannelementen 8 enthält. Die Werkzeugaufnahme 1 ist mit dem Spannkegel 6 in eine entsprechende konische Aufnahme 9 einer Maschinenspindel 10 eingesetzt und wird durch die zangenförmigen Spannelemente 8 einer in der Maschinenspindel 10 integrierten Spannvorrichtung gespannt.

Bei der gezeigten Ausführung ist die Werkzeugaufnahme 1 als Schrumpffutter ausgebildet und enthält einen vorderen Spannbereich 11, in dem die zur Mittelachse des Aufnahmekörpers 3 zentrische Aufnahmeöffnung 4 für den Werkzeugschaft 5 des Werkzeugs 2 angeordnet ist. Bei einer derartigen Werkzeugaufnahme 1 wird der vordere Spannbereich 11 des Aufnahmekörpers 4 z.B. durch induktive Erwärmung erhitzt, wodurch sich der Innendurchmesser der Aufnahmeöffnung 4 vergrößert. Im erwärmten Zustand des vorderen Spannbereichs 11 wird der Werkzeugschaft 5 des Werkzeugs 2 in die Aufnahmeöffnung 4 eingesetzt, wobei das Verhältnis des Innendurchmessers der Aufnahmeöffnung 4 zum Außendurchmesser des Werkzeugschafts 5 derart ausgelegt ist, dass das Werkzeug 2 beim anschließenden Abkühlen des Spannbereichs 11 fest in der Werkzeugaufnahme 1 gehalten wird.

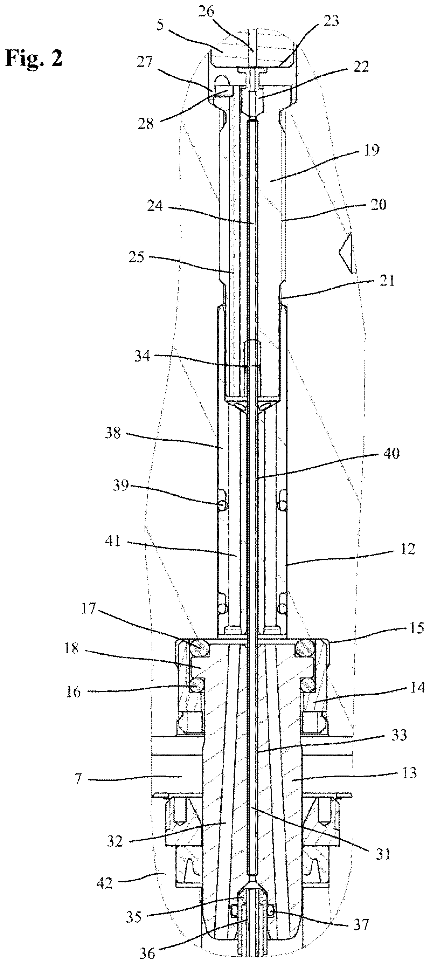

Wie besonders aus Figur 2 hervorgeht, enthält der Aufnahmekörper 3 eine zentrale Durchgangsöffnung 12, die von dem erweiterten Hohlraum 7 am maschinenseitigen Ende des Aufnahmekörpers 3 zentral durch den Aufnahmekörper 3 hindurch bis zur Aufnahmeöffnung 4 für den Werkzeugschaft 5 verläuft. An dem Übergang von dem Hohlraum 7 zu der Durchgangsöffnung 12 ist in dem Aufnahmekörper 3 ein rohrförmiges Übergabeelement 13 angeordnet. Das rohrförmige Übergabeelement 13 ist über eine Gewindehülse 14 in einer stufenförmigen Erweiterung 15 am Übergang von dem Hohlraum 7 zur Durchgangsöffnung 12 durch Dichtungen 16 und 17 radial abgedichtet fixiert. Hierzu weist das rohrförmige Übergabeelement 13 einen Ringbund 18 auf und die Gewindehülse 14 ist in Art einer Überwurfmutter mit einem Außengewinde in ein entsprechendes Innengewinde der stufenförmigen Erweiterung 15 eingeschraubt.

An dem Übergang von der Durchgangsöffnung 12 zu der Aufnahmeöffnung 4 für den Werkzeugschaft 5 ist in der Durchgangsöffnung 12 ein hülsenförmiges Anschlagteil 19 axial verstellbar angeordnet. Hierzu ist das hülsenförmige Anschlagteil 19 über ein Außengewinde 20 in ein entsprechendes Innengewinde 21 an dem in die Aufnahmeöffnung 4 mündenden Ende der zentralen Durchgangsöffnung 12 eingeschraubt. Das hülsenförmige Anschlagteil 19 weist an seinem dem Werkzeugschaft 6 zugewandten Ende ein Dichtstück 22 zur Anlage an einer hinteren Stirnfläche 23 des Werkzeugschafts 5 auf.

Wie in Figur 2 erkennbar ist, enthält das hülsenförmige Anschlagteil 19 ein zentrales Durchgangsloch 24 und mehrere von diesem getrennte Durchgangskanäle 25, die gegenüber dem Durchgangloch 24 radial nach außen versetzt und in Umfangsrichtung gleichwinklig beabstandet in Längsrichtung durch das Anschlagteil 19 verlaufen. Die um das zentrale Durchgangsloch 24 angeordneten Durchgangskanäle 25 können z.B. einen ringsegmentförmigen Querschnitt aufweisen. An dem zum Werkzeugschaft 3 gewandten Ende des Anschlagteils 19 ist das mit einem Durchgang versehene Dichtstück 22 zur abgedichteten Verbindung zwischen dem zentralen Durchgangsloch 24 und einer durch den Werkzeugschaft 6 verlaufenden zentralen Kühlbohrung 26 angeordnet.

Die im vorderen Spannbereich 11 des Aufnahmekörpers 3 angeordnete Aufnahmeöffnung 4 ist an dem inneren Ende radial erweitert, so dass zwischen dem inneren Ende des Werkzeugschafts 6 und der Aufnahmeöffnung 5 ein Verteilerraum 27 für einen über die Durchgangskanäle 25 zugeführten Kühlschmierstoff gebildet wird. Zur Verbindung der Durchgangskanäle 25 mit dem Verteilerraum 27 sind an dem inneren Ende des hülsenförmigen Anschlagteils 19 in die Durchgangskanäle 25 mündende radiale Aussparungen 28 vorgesehen. In dem vorderen Spannbereich 11 können an der Innenseite der Aufnahmeöffnung 4 mehrere voneinander beabstandete Längsschlitze vorgesehen sein, über die der durch die Durchgangkanäle 25 im Anschlagteil 19 geleitete Kühlschmierstoff an der Außenseite des Werkzeugschafts 5 entlang zur vorderen Stirnseite 29 des Aufnahmekörpers 3 geleitet werden kann. Die Längsschlitze können auch konisch zulaufen, d.h. einen sich nach vorne verengenden Querschnitt aufweisen.

Dadurch kann eine Ausrichtung des über die Durchgangkanäle 25 eingeleiteten Kühlschmiermittels zum Werkzeug 2 hin erfolgen. Außerdem kann dadurch eine Beschleunigung des Kühlschmiermittelstrahles erfolgen. Es ergeben sich wenigere Streuverluste außerhalb des Futters und es kann eine bessere Trennung von Schmierstoff und Luft erfolgen.

In einer entsprechenden Vertiefung an der vorderen Stirnseite 29 des Aufnahmekörpers 3 kann eine in Figur 1 gezeigte Verteilerscheibe 30 mit Verteilerbohrungen oder Verteilerschlitzen zur gerichteten Verteilung des durch Längsbohrungen zu der vorderen Stirnseite 29 geleiteten Fluids angeordnet sein.

Aus Figur 2 ist ersichtlich, dass auch das rohrförmige Übergabeelement 13 ein zentrales Durchgangsloch 31 und mehrere von diesem getrennte weitere Durchgangskanäle 32 enthält, die gegenüber dem zentralen Durchgangloch 31 radial nach außen versetzt und in Umfangsrichtung gleichwinklig beabstandet in Längsrichtung durch das Übergabeelement 13 verlaufen. Auch hier können die um das zentrale Durchgangsloch 31 angeordneten Durchgangskanäle 32 einen ringsegmentförmigen Querschnitt aufweisen. Die Verbindung zwischen dem Durchgangsloch 24 in Anschlagteil 19 und dem Durchgangsloch 31 im Übergabeelement 19 erfolgt durch ein Verbindungsrohr 33, das mit seinen Enden in dem Durchgangsloch 24 des Anschlagteils 19 und dem Durchgangsloch 31 des Übergabeelements 13 sitzt.

Beim gezeigten Ausführungsbeispiel ist das im Durchgangsloch 31 des Übergabeelements 13 sitzende Ende des Verbindungsrohrs 33 axial gesichert im Übergabeelement 13 angeordnet, während das in das Durchgangsloch 24 des Anschlagteils 19 ragende Ende des Verbindungsrohrs 33 gegenüber dem Anschlagteil 19 axial verschiebbar und durch eine Dichtung 34 abgedichtet im Durchgangsloch 24 sitzt. Dadurch kann das Anschlagteil 19 zur Einstellung axial bewegt werden. Selbstverständlich kann das Verbindungsrohr 33 aber auch in dem Anschlagteil 19 axial gesichert und in dem Übergabeelement 13 verschiebbar sein. An dem zur Maschinenspindel 10 weisenden Ende des Übergabeelements 13 weist das Durchgangsloch 31 einen Bereich mit erweitertem Durchmesser auf. In diesen Bereich ist ein Dichtstück 35 einer Übergabelanze 36 durch einen O-Ring 37 radial abgedichtet angeordnet. Ebenso kann die Abdichtung dadurch erfolgen, dass das Dichtstück 35 mit seiner Stirnseite auf ein Dichtelement gedrückt wird. Der O-Ring oder das Dichtelement bestehen vorzugsweise aus einem Kunststoff, der auch bei niedrigen Temperaturen noch über ausreichend Elastizität verfügt.

In der Durchgangsöffnung 12 des Aufnahmekörpers 3 ist zwischen dem Übergabeelement 13 und dem Anschlagteil 19 eine Dichthülse 38 angeordnet. Die Dichthülse 38 ist innerhalb der Durchgangsöffnung 12 zur Vibrationsdämpfung mit Dichtringen 39 gelagert. Die Dichthülse 38 kann außerdem in Längsrichtung elastisch sein, so dass sie auch bei einer axialen Verstellung des Anschlagteils 19 mit ihren beiden Enden abdichtend in Kontakt mit dem Übergabeelement 13 und dem Anschlagteil 19 bleibt. In einer bevorzugten Ausführungsform überlappt sie aber axial mit dem Anschlagteil 19, so dass sie auch bei einer Verstellung des Anschlagteils 19 in dichtenden Kontakt mit dem Anschlagteil 19 bleibt. Die Dichthülse 38 weist einen zentralen Durchgang 40 für das Verbindungsrohr 33 und mehrere von dem Durchgang 40 getrennte weitere Verbindungskanäle 41 auf. An den Übergabestellen von Übergabeelement 13 auf Dichthülse 38 und von Dichthülse 38 auf Anschlagteil 19 befinden sich Hohlräume, in denen sich das Fluid verteilen kann und so den Weg in die folgenden Kanäle findet.

Die Übergabe der Fluide von der Maschinenspindel 10 auf das rohrförmige Übergabeelement 13 erfolgt durch ein auf das Übergabeelement 13 aufsteckbares Kupplungsteil 42 mit einer Durchgangsöffnung 43 und der zentralen Übergabelanze 36, die durch das Dichtstück 35 gegenüber dem rohrförmigen Übergabeelement 13 abgedichtet ist. Durch die Durchgangsöffnung 43 im Kupplungsteil 42 kann ein Fluid über die Durchgangskanäle 32 des Übergabeelements 13, die Verbindungskanäle 41 der Dichthülse 38 und die Durchgangskanäle 25 im Anschlagteil 19 zum Schaft 5 des Werkzeugs 2 geleitet werden. Durch die zentrale Übergabelanze 36 kann dagegen flüssiges CO₂ oder ein anderes weiteres Fluid über das Übergabeelement 13, das Verbindungsrohr 33 und das Anschlagteil 19 zu einer hier als zentrale Kühlbohrung ausgebildeten Fluidzuführung 44 im Werkzeug 2 geleitet werden. Wie aus Figur 1 hervorgeht, weist die als Kühlmittelbohrung ausgebildete Fluidzuführung 44 an einem Ausgang zu einer Schneide 45 eine Drosselstelle 46 auf.

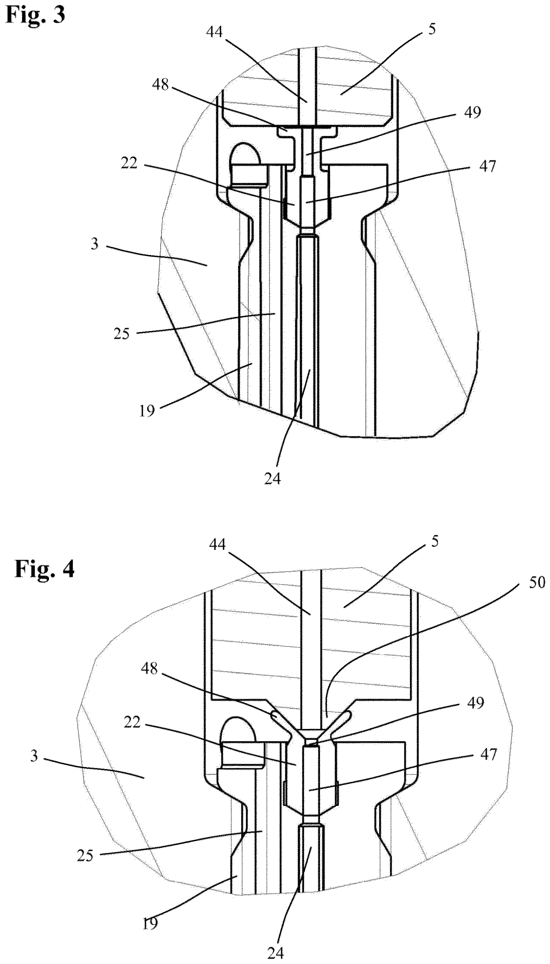

In Figur 3 ist der Übergangsbereich zwischen dem Anschlagteil 19 und dem Werkzeugschaft 5 der in den Figuren 1 und 2 gezeigten Ausführung in einer vergrößerten Darstellung gezeigt. An dem zum Werkzeugschaft 5 gewandten Ende des Anschlagteils 19 ist das mit einem Durchgang 47 versehene Dichtstück 22 zur abgedichteten Verbindung zwischen dem zentralen Durchgangsloch 24 und der durch den Werkzeugschaft 6 verlaufenden zentralen Fluidzuführung 44 angeordnet. Das z.B. aus Metall bestehende Dichtstück 22 ist in Längsrichtung elastisch und weist ein tellerförmiges Anlageteil 48 mit einer metallischen Dichtkante auf. Das tellerförmige Anlageteil 48 ist derart ausgebildet, dass er die hier als Kühlmittelbohrung ausgebildete Fluidzuführung 44 im Werkzeug 2 überdeckt. Das Anlageteil 48 kann so gestaltet werden, dass es mehrere außenmittig angebrachte Kühlbohrungen 26 im Werkzeugschaft 5 überdecken kann. Das Dichtstück 22 kann fest oder um die Längssachse pendelnd in dem Anschlagteil 19 angeordnet sein. Eine pendelnde Anordnung kann z.B. dadurch erreicht werden, dass das Dichtstück 22 elastisch ausgebildet oder über eine Kugelkalotte schwenkbar in dem Anschlagteil 19 angeordnet ist. Durch eine pendelnde Anordnung kann sich das Dichtstück 22 besser an evtl. Ungenauigkeiten oder Unebenheiten am Ende des Werkzeugschafts 5 angleichen. In dem Durchgang 47 des Dichtstücks 22 ist eine Drosselstelle 49 zur Aufrechterhaltung des Druckes stromaufwärts der Drosselstelle 49 vorgesehen. Durch die Drosselstelle wird der Durchmesser des Fluidkanals reduziert, wodurch der Druck hochgehalten werden kann.

Figur 4 zeigt ein weiteres Ausführungsbeispiel eines Dichtstücks 22, das an dem zum Werkzeugschaft 5 gewandten Ende des Anschlagteils 19 angeordnet ist. Dieses Dichtstück 22 dient zur Abdichtung gegenüber einem Werkzeugschaft 5, der an seinem hinteren Ende eine Spitze 50 aufweist. Das Dichtstück 22 enthält hier ein konisches Anlageteil 48, das die Spitze 50 am hinteren Ende des Werkzeugschafts 5 überdeckt. Auch hier ist in dem Durchgang 47 des Dichtstücks 22 eine Drosselstelle 49 zur Aufrechterhaltung des Druckes stromaufwärts der Drosselstelle 49 vorgesehen. Das Dichtstück 22 ist hier um die Längsachse pendelnd an dem Anschlagteil 19 angeordnet.

## Patentansprüche

1. Werkzeugaufnahme (1) mit einem Aufnahmekörper (3), der eine Aufnahmeöffnung (4) für einen Werkzeugschaft (5) eines Werkzeugs (2) und eine durch den Aufnahmeköper (3) verlaufende Fluidzuführung (24, 31, 33) für eine Fluidzufuhr zu dem Werkzeug enthält, wobei in der Fluidzuführung (24, 31, 33) mindestens eine Drosselstelle (49) angeordnet ist, die geeignet ist, den Druck auf das Fluid so hoch zu halten, dass keine übermäßige vorzeitige Verdampfung des Fluids erfolgt, **dadurch gekennzeichnet, dass** die Drosselstelle (49) in einem am Werkzeugschaft (5) des Werkzeugs (2) anliegbaren Dichtstück (22) angeordnet ist, das elastisch nachgiebig und/oder um eine Längsachse pendelnd in einem in der Werkzeugaufnahme (1) angeordneten Anschlagteil (19) angeordnet ist.

2. Werkzeugaufnahme nach Anspruche 1, **dadurch gekennzeichnet, dass** die Drosselstelle (49) einen festen oder veränderbaren Drosselquerschnitt aufweist.

3. Werkzeugaufnahme nach Anspruch 1 oder 2, **dadurch gekennzeichnet, dass** die Fluidzuführung (24, 31, 33) durch ein Durchgangsloch (24) im Anschlagteil (19), ein weiteres Durchgangsloch (31) in einem im Aufnahmekörper (3) angeordneten Übergabeelement (13) und ein im Aufnahmekörper (3) angeordnetes Verbindungsrohr (33) zur Verbindung der beiden Durchgangslöcher (24, 31) gebildet wird.

4. Werkzeugaufnahme nach Anspruch 3, **dadurch gekennzeichnet, dass** zwischen dem Übergabeelement (13) und dem Anschlagteil (19) eine durch Dichtungen (39) radial gegenüber dem Aufnahmekörper (3) abgestützte Dichthülse (38) angeordnet ist.

5. Werkzeugaufnahme nach einem der Ansprüche 1 bis 4, **dadurch gekennzeichnet, dass** durch den Aufnahmekörper (3) ein mit der Fluidzuführung (22, 33, 35) nicht in Verbindung stehender weiterer Fluidkanal (25, 32, 41) für eine von der ersten Fluidzuführung (22, 33, 35) getrennte Fluidzufuhr zum Werkzeug verläuft.

6. Werkzeugaufnahme nach Anspruch 5 soweit auf Anspruch 3 oder 4 zurückbezogen, **dadurch gekennzeichnet, dass** der weitere Fluidkanal (25, 32, 41) durch mindestens einen vom Durchgangsloch (24) getrennten Durchgangskanal (25) im Anschlagteil (19), mindestens einen vom weiteren Durchgangsloch (31) getrennten weiteren Durchgangskanal (32) im Übergabeelement (13) und mindestens einem im Aufnahmekörper angeordneten Verbindungskanal (41) zur Verbindung der Durchgangskanäle gebildet ist.

7. Werkzeugaufnahme nach einem der Ansprüche 1 bis 6, **dadurch gekennzeichnet, dass** die Drosselstelle (49) ein Querschnittsverhältnis kleiner 0,5; bevorzugt 0,2 und besonders bevorzugt 0,1 aufweist.

8. Werkzeugaufnahme nach einem der Ansprüche 1 bis 7, **dadurch gekennzeichnet, dass** das Fluid flüssiges CO₂ ist.

## Claims

1. Tool holder (1) having a holding body (3) which contains a holding opening (4) for a tool shank (5) of a tool (2) and contains a fluid feed (24, 31, 33), extending through the holding body (3), for a fluid supply to the tool, wherein, in the fluid feed (24, 31, 33), there is arranged at least one throttle point (49) which is suitable for keeping the pressure on the fluid so high that no excessive premature evaporation of the fluid takes place, **characterized in that** the throttle point (49) is arranged in a sealing piece (22) which can be made to bear against the tool shank (5) of the tool (2) and which is arranged in an elastically compliant manner, and/or in a manner oscillating about a longitudinal axis, in a stop part (19) which is arranged in the tool holder (1).

2. Tool holder according to Claim 1, **characterized in that** the throttle point (49) has a fixed or variable throttle cross section.

3. Tool holder according to Claim 1 or 2, **characterized in that** the fluid feed (24, 31, 33) is formed by a passage hole (24) in the stop part (19), by a further passage hole (31) in a transfer element (13) arranged in the holding body (3), and by a connecting tube (33) arranged in the holding body (3) and serving for connecting the two passage holes (24, 31) .

4. Tool holder according to Claim 3, **characterized in that** a sealing sleeve (38) supported by seals (39) radially in relation to the holding body (3) is arranged between the transfer element (13) and the stop part (19).

5. Tool holder according to one of Claims 1 to 4, **characterized in that** a further fluid channel (25, 32, 41), not connected to the fluid feed (22, 33, 35), for a fluid supply, separate from the first fluid feed (22, 33, 35), to the tool extends through the holding body (3).

6. Tool holder according to Claim 5 where referred back to Claim 3 or 4, **characterized in that** the further fluid channel (25, 32, 41) is formed by at least one passage channel (25), which is separate from the passage hole (24), in the stop part (19), by at least one further passage channel (32), which is separate from the further passage hole (31), in the transfer element (13), and by at least one connecting channel (41), which is arranged in the holding body, for connecting the passage channels.

7. Tool holder according to one of Claims 1 to 6, **characterized in that** the throttle point (49) has a cross-section ratio of less than 0.5, preferably 0.2, and particularly preferably 0.1.

8. Tool holder according to one of Claims 1 to 7, **characterized in that** the fluid is liquid CO₂.

## Revendications

1. Porte-outil (1) avec un corps de réception (3), qui contient une ouverture de réception (4) pour une tige d'outil (5) d'un outil (2) et une amenée de fluide (24, 31, 33) s'étendant à travers le corps de réception (3) pour une amenée de fluide vers l'outil, au moins un point d'étranglement (49) étant agencé dans l'amenée de fluide (24, 31, 33), qui est approprié pour maintenir la pression sur le fluide à un niveau suffisamment élevé pour qu'une évaporation prématurée excessive du fluide n'ait pas lieu, **caractérisé en ce que** le point d'étranglement (49) est agencé dans une pièce d'étanchéité (22) pouvant être appliquée contre la tige d'outil (5) de l'outil (2), qui est agencée de manière à pouvoir céder élastiquement et/ou de manière à osciller autour d'un axe longitudinal dans une partie de butée (19) agencée dans le porte-outil (1).

2. Porte-outil selon les revendications 1, **caractérisé en ce que** le point d'étranglement (49) présente une section transversale d'étranglement fixe ou variable.

3. Porte-outil selon la revendication 1 ou 2, **caractérisé en ce que** l'amenée de fluide (24, 31, 33) est formée par un trou de passage (24) dans la partie de butée (19), un autre trou de passage (31) dans un élément de transfert (13) agencé dans le corps de réception (3) et un tube de liaison (33) agencé dans le corps de réception (3) pour relier les deux trous de passage (24, 31) .

4. Porte-outil selon la revendication 3, **caractérisé en ce qu'**un manchon d'étanchéité (38) soutenu radialement par rapport au corps de réception (3) par des joints d'étanchéité (39) est agencé entre l'élément de transfert (13) et la partie de butée (19).

5. Porte-outil selon l'une quelconque des revendications 1 à 4, **caractérisé en ce qu'**un autre canal de fluide (25, 32, 41) non relié à l'amenée de fluide (22, 33, 35) s'étend à travers le corps de réception (3) pour une amenée de fluide vers l'outil séparée de la première amenée de fluide (22, 33, 35).

6. Porte-outil selon la revendication 5, dans la mesure où elle se rapporte à la revendication 3 ou 4, **caractérisé en ce que** l'autre canal de fluide (25, 32, 41) est formé par au moins un canal de passage (25) séparé du trou de passage (24) dans la partie de butée (19), au moins un autre canal de passage (32) séparé de l'autre trou de passage (31) dans l'élément de transfert (13) et au moins un canal de liaison (41) agencé dans le corps de réception pour relier les canaux de passage.

7. Porte-outil selon l'une quelconque des revendications 1 à 6, **caractérisé en ce que** le point d'étranglement (49) présente un rapport de section transversale inférieur à 0,5 ; de préférence 0,2 et de manière particulièrement préférée 0,1.

8. Porte-outil selon l'une quelconque des revendications 1 à 7, **caractérisé en ce que** le fluide est du CO₂ liquide.
